# EUROPEAN PATENT SPECIFICATION

(11) **EP 2 148 576 B1**
(45) Date of publication and mention of the grant of the patent: **06.07.2011**
(21) Application number: 08734515.3
(22) Date of filing: 28.04.2008
(51) Int. Cl.: A23G 9/22, A23G 9/26, B28B 5/08, A23G 9/08

(54) **SYSTEM FOR PRODUCING FORM-MOULDED ITEMS OF EDIBLE ICE**
SYSTEM FÜR DIE ERZEUGUNG VON FORMGEGOSSENEN SPEISEEISSTÜCKEN
SYSTÈME DE PRODUCTION D'ARTICLES MOULÉS EN GLACE COMESTIBLE

(30) Priority: 27.04.2007 DK 200700633
(43) Date of publication of application: 03.02.2010
(73) Proprietor: Tetra Laval Holdings & Finance SA, 1109 Pully (CH)
(72) Inventor: HANSEN, Per, Henrik, DK-8340 Malling (DK); BENDIXEN, Ole, DK-8464 Galten (DK); BONDE, Tommy, DK-8600 Silkeborg (DK)
(74) Representative: Jeppesen, Jens
(86) International application number: PCT/DK2008/000158
(87) International publication number: WO 2008/131770

(56) References cited:
- WO-A-2005/099475
- US-A- 4 548 573
- US-A1- 2006 034 989
- US-A1- 2006 283 201

## Description

### Field of the invention

The present invention relates to a system for use in producing form-moulded items of edible ice from a mass of ice, the system comprising a number of mould boxes arranged to form a circle, wherein moulds for receiving the mass of ice are formed between neighbouring mould boxes.

### Background of the invention

Form-moulded items of edible ice, such as so-called ice lollies, are conventionally produced by filling series of mould cavities with a mass of ice and conveying the mould cavities extending downwards into a freezing bath, typically a cooled brine consisting of an aqueous brine solution at a temperature about -40 °C in a sufficient time for the items of ice to freeze, after which the mould cavities are transferred for further conveying into a warm melting bath for a shorter time period, so that the moulded items of ice let go of the surface of the mould cavities and can be extracted from there. For this production process, it is a condition that the mould cavities are designed so that the formed items of edible ice can be pulled out from the mould cavities.

There is, however, a considerable market for items of ice having a more complex design, the so-called 3D-edible items of ice, which are, for example, designed as figures of persons, making it impossible for the items to be pulled out from a mould cavity. For the production of such items of edible ice, it is known to use mould boxes having an internal cavity for the fluid cooling medium and, optionally, for a heating medium and having formed half a mould in side-faces facing a neighbouring mould box, so that two neighbouring mould boxes, the side-faces of which are pressed against each other, between them form moulds for receiving an ice mass, which is subsequently frozen to an item of edible ice. By separating the two neighbouring mould boxes from each other, it is made possible that the formed item of edible ice can be removed, e.g. by mechanical extraction from the moulds, and, therefore, items of edible ice of a complex design, not allowing the item to be pulled out from a conventional mould cavity, can be produced. Such a system is described in WO 03/099034, wherein the mould boxes are designed as sections of a ring and are arranged to form a closed circle.

In known systems, the mould boxes are arranged, so that they have a certain mutual mobility in the radial direction and are pressed against each other by an elastic ring, which surrounds the outer surface of the mould boxes, so that these are pressed against each other, and the opening between two neighbouring mould boxes for extraction of the moulded items of edible ice is formed by forcing the mould boxes apart, and the mutual mobility of the mould boxes absorbs under the influence of the elastic ring the displacements implied thereby.

It turns out, however, that opening the circle in this way is associated with disadvantages for the forming of certain types of items of edible ice, because, when using easy flowing mass of ice, it can happen that parts of the mass in moulds, which have just been filled and consequently are not yet frozen sufficiently, may flow out through the opposite walls of the mould boxes, and that items of edible ice, which become fragile once they are in a final frozen state, can break when the mould boxes, between which the moulds are formed, move relatively to each other.

It is, therefore, an object of the present invention to provide a system for producing moulded items of edible ice, which allows for a complexity of the shapes of the items of edible ice without the above-mentioned disadvantages.

### Summary of the invention

Such a system is provided by the present invention, wherein mould boxes are arranged in a circle, wherein a first opening is formed between two neighbouring mould boxes for extraction of one or more created items of edible ice from moulds formed between said two neighbouring mould boxes, e.g. by mechanical extraction of the items of edible ice. In the system, an index control is provided, which is arranged to move the first opening by performing an angular rotation of one of the mould boxes, so that it is moved into the first opening, thereby closing the same, while the neighbouring mould boxes having items of ice in the moulds between them, are not moved. Thereby a new opening for extraction of completed items of edible ice is formed. Thus, it is obtained that the mould boxes do not need to be movable with respect to each other during formation of the first opening, whereby the disadvantages of the prior art are avoided.

The present invention, thus, relates to a system for use in creating form-moulded items of edible ice from a mass of ice, the system comprising
a number of mould boxes arranged to form a circle, wherein moulds for receiving the mass of ice are formed between neighbouring mould boxes, each of the mould boxes comprising an interior cavity for containing a fluid medium and an inlet stub and an outlet stub both connecting to the interior cavity,
supply means for supplying a fluid cooling medium to the inlet stub of each mould box,
discharge means for discharging the fluid cooling medium from the outlet stub of each mould box, and
extraction means for removing the produced items of edible ice,
the mould boxes being arranged, so that a first opening is formed in the circle between two neighbouring mould boxes, and
the system comprising an index control arranged to perform an angular rotation about the axis of the circle between a first of the two neighbouring mould boxes with respect to an adjacent group of a plurality of neighbouring mould boxes for closing the first opening, so that again a first opening is formed between the first mould box and the respective neighbouring mould box, which constitutes a part of the adjacent group, which first opening allows removal of one or more created items of edible ice from moulds formed between the two neighbouring mould boxes by means of the extraction means,
the mould boxes of said group not being substantially displaced with respect to each other during angular rotation and, thus, not being displaced during formation of the first opening between the first mould box and the respective neighbouring mould box.

Typically, the system also comprises a filling device for filling the mass of ice into the formed moulds.

The index control is preferably arranged, so that the mould boxes of said group are not substantially displaced with respect to each other during angular rotation.

It is advantageous that each mould box has substantially the same angular extent in the circle, whereby the index control can be designed in a simple way, the first opening between neighbouring mould boxes being formed in a uniform manner.

It is further advantageous that the magnitude of the angular rotation for the formation of the first opening is substantially equal to the circular angle constituted by a mould box, in that all steps in operating the system by angular rotations of the mould boxes may take place by rotating boxes the angle constituted by an individual mould box.

In a preferred embodiment of the invention, the number of mould boxes constitutes at the most one less than the number required to form a filled up circle so that, if a single mould box extends over an angle of 4°, the number of mould boxes is 89 at the most, whereby it is not necessary that neighbouring mould boxes in the circle are moveable with respect to each other in order to provide space for the first opening. Similarly, if a single mould box extends over an angle of 6°, the number of mould boxes is 59 at the most.

Further, additional openings can be formed, depending on the arrangement of the system and the number of mould boxes. It is advantageous for operating the system that it further comprises a cleaning device arranged to remove any residues of items of edible ice, which have not been extracted by the extraction means, at least from the opposite faces of the mould boxes between which an opening has been formed, which can be the first opening.

Additionally, the system may comprise feeding means for feeding material into one or more mould halves formed in the opposite faces of mould boxes between which an opening has been formed.

It is a further advantageous embodiment of the present invention, that the mould boxes are arranged, so that in addition to the first opening, a second opening is formed in the circle between two neighbouring mould boxes, and that the system comprises an index control arranged to perform an angular rotation about the axis of the circle between a first of the two mould boxes with respect to an adjacent group of one or more neighbouring mould boxes between the first opening and the second opening for closing the second opening, so that again a second opening is formed between the first mould box and the respective neighbouring mould box, which constitutes a part of the adjacent group, the mould boxes of said group not being substantially displaced during angular rotation and, thus, not being displaced during formation of the second opening between the first mould box and the respective neighbouring mould box. In this way, the first and the second openings may be formed simultaneously, whereby operations on the two openings can take place simultaneously and, thereby, make the operation of the system more effective.

The second opening provides the possibility that an automatic cleaning of the opposite faces of the neighbouring mould boxes, a feeding of material to form part of the item of the edible ice, such as a piece of chewing gum or the like, or both, can take place. This could also be done in the first opening, but by providing a second opening, it is possible to heat the mould boxes further than what is needed for loosening the frozen items of edible ice from the moulds, wherein they are formed, so that residues of the mass of ice either melts and runs down by itself or more easily can be removed by a cleaning device. In case of operational failures, where an item of edible ice is not sufficiently loosened for it to be removed by the extraction means, the item of edible ice is broken so that the extraction means cannot remove the whole item of edible ice, or where the item of edible ice is an ice lolly, the stick of which is broken so the extraction means cannot remove the item of edible ice by gripping around the stick, this embodiment of the system can enable the problems to be solved automatically without manual interference by a human operator.

In this embodiment, it is further advantageous that the number of mould boxes constitutes at the most two less than the number required to form a filled up circle so that, if a single mould box extends over an angle of 4°, the number of mould boxes is 88 at the most, whereby it is not necessary that neighbouring mould boxes in the circle are movable with respect to each other in order to create space for the first opening as well as the second opening, so that these can be formed simultaneously. Similarly, if a single mould box extends over an angle of 6°, the number of mould boxes is 58 at the most.

In a preferable embodiment, the mentioned supply means and discharge means comprises flexible connections for the supply stubs and discharge stubs for each of the mould boxes, so that angular rotations are allowed between the mould boxes and a fixed part of the supply means and the discharge means. Preferably, the flexible connections allow an angular rotation between the mould boxes and a fixed part of the supply means and the discharge means of at least half of the circular angle constituted by the formed opening or openings together, the mould boxes either being ahead of or behind the fixed part.

It is advantageous that each of the mould boxes is arranged so that the distal end of the mould box is allowed to be displaced in the radial direction with respect to the axis of the circle during operation of the system, and that the system comprises compression means for affecting each of the mould boxes with a force directed inwards, substantially towards the axis of the circle, the extent of the mould boxes in the radial direction changing partly due to the variation in temperature during operation and, in particular, due to the extension of the mass of ice occurring when it is frozen to an item of edible ice, which implies a little further distance between the neighbouring mould boxes, which distance can be accommodated by the boxes being moveable in the radial direction.

The compression means causes the opposite faces of the neighbouring mould boxes to be pressed together, whereby the formed moulds are tightened. For the present system, it is an advantage that the compression means comprises individual means for each mould box, so that the formation of the openings is not prevented and does not affect the compression force exercised on the boxes.

In a particularly preferred embodiment, the extraction means are arranged stationary, and the index control is consequently arranged to perform the angular rotation of the assembled mould boxes, so that the opening aligns with the extraction means. This angular rotation is preferably of a magnitude equal to the circular angle constituted by a mould box. Alternatively, the extraction means and optional filling means for filling mass of ice are movable and can be moved around the arrangement of mould boxes.

### Brief description of the drawings

An embodiment of the present invention is described below with reference to the appended figures, in which
Fig. 1 shows a perspective view of two juxtaposed mould boxes,
Fig. 2 shows a top view of a first system for use in creating form-moulded items of edible ice from a mass of ice, in a first position,
Fig. 3 shows the system of Fig. 2 in a second position,
Fig. 4 shows the system of Figs. 2 and 3 in a third position,
Fig. 5 shows a top view of another system for use in creating form-moulded items of edible ice from a mass of ice, in a first position,
Fig. 6 shows the system of Fig. 5 in a second position, and
Fig. 7 shows the system of Figs. 5 and 6 in a third position.

The figures are provided as an example of how the present invention can be carried out and should not be interpreted as limiting for the scope of protection as defmed in the accompanying claims.

### Detailed description

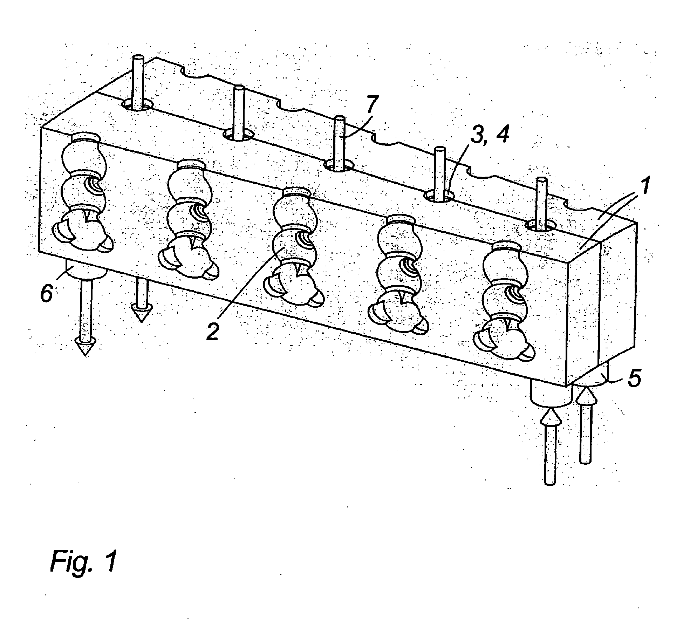

Fig. 1 shows two juxtaposed, hollow mould boxes 1 each being provided with depressions in the form of moulds halves 2 in the opposite faces. During the juxtaposition, thus, a series of mould cavities 4 will be formed in the middle, which mould cavities are closed below and at the sides while having a filling opening 3 at the top. In the bottom, each box has an inlet stub 5 at the one side and an outlet stub 6 at the opposite side for establishing a flow through the box.

Fig. 1 shows that respective filling pipes 7 are inserted into the filling openings 3, through which filling pipes 7 the mould cavities 4 are filled with mass of ice, after which the filling pipes 7 are removed.

In relation to the mass of ice being filled into the mould cavities 4, a cooling medium, preferably cold brine, is let through the internal cavities of the boxes 1, where the cooling medium flows from the inlet stub 5 through each mould box 1 to the outlet stub 6.

When the ice is sufficiently frozen, support sticks can be inserted into the mass of ice through the openings 3, so that so-called ice lollies are formed.

When the freezing has been completed, there is a shift to a short-duration flow through the internal cavities of the mould boxes 1 with a suitable heating medium, such as hot brine or another medium for the thawing-free of the frozen items of ice, after which the boxes 1 can be separated from each other by formation of the first opening according to the invention. By the thawing-free, the outermost layer of the frozen items of ice will melt again, so that the extraction means for extracting the items of ice from the mould cavities 4 can easily do this without the items of ice being stuck in the mould 4.

If the items of ice are provided with support sticks, these can be gripped with a conventional stick-gripping equipment before formation of the first opening, but otherwise special grippers can be arranged. In this connection, it can be a relevant possibility that a one-sided thawing-free is induced in a first phase, so that the items of ice at the mould opening remain in contact with one and the same box, which then after a gripping of the items is heated for final release of the items of ice. In extreme cases, the items could be released by simply being dropped onto a packaging conveyor. With respect to the handling of the items, it will be an advantage that operation can be carried out in a completely dry environment.

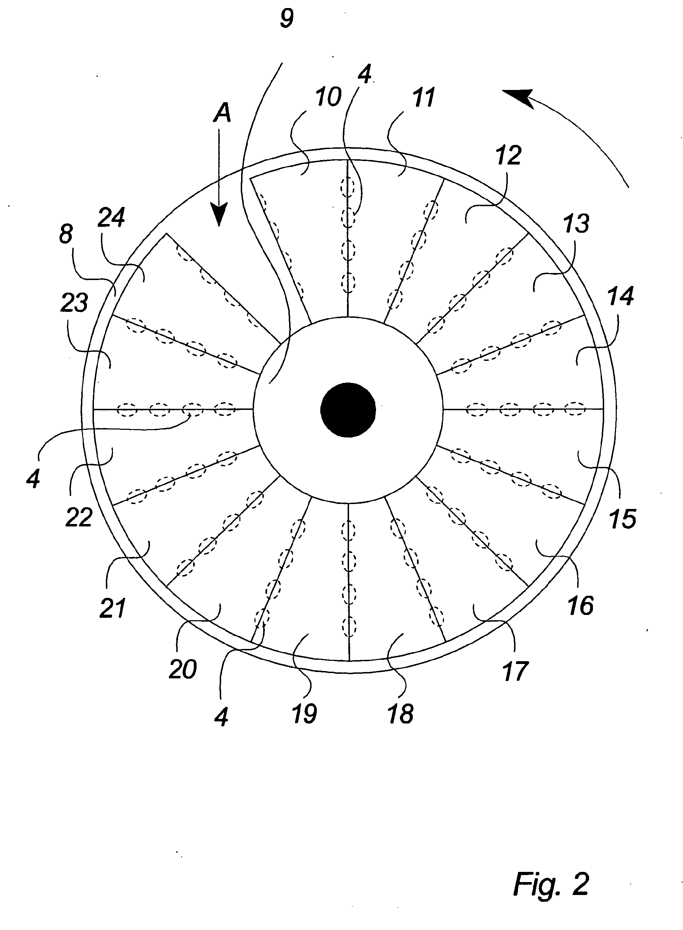

Figs. 2-4 show a first embodiment of the invention, wherein an outer ring 8 supports the outer end of the mould boxes 10-24, which are arranged in an encircling circle. The inner ring 9 contains the supply means and the removal means (not shown) for supplying fluid cooling medium in form of brine at -40 °C to and from the internal cavities of the mould boxes and supply a hot brine to and from the internal cavities for thawing-free the formed items of edible ice. The inlet stubs 5 and the outlet stubs 6 of the mould boxes are connected with the inner ring by flexible connections allowing a certain angular displacement between the mould boxes 10-24 and the inner ring 9 during operation of the system.

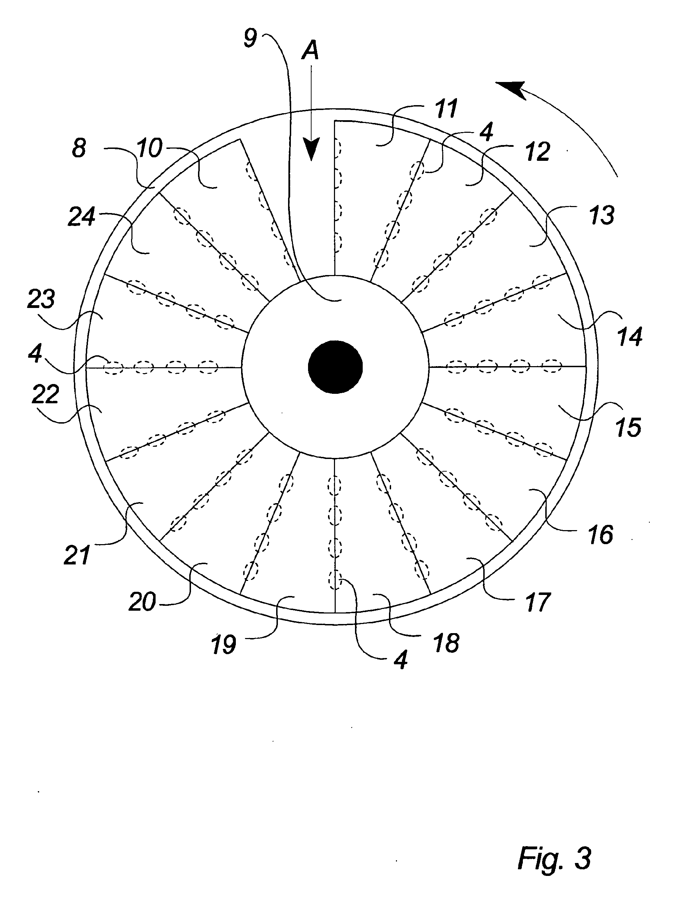

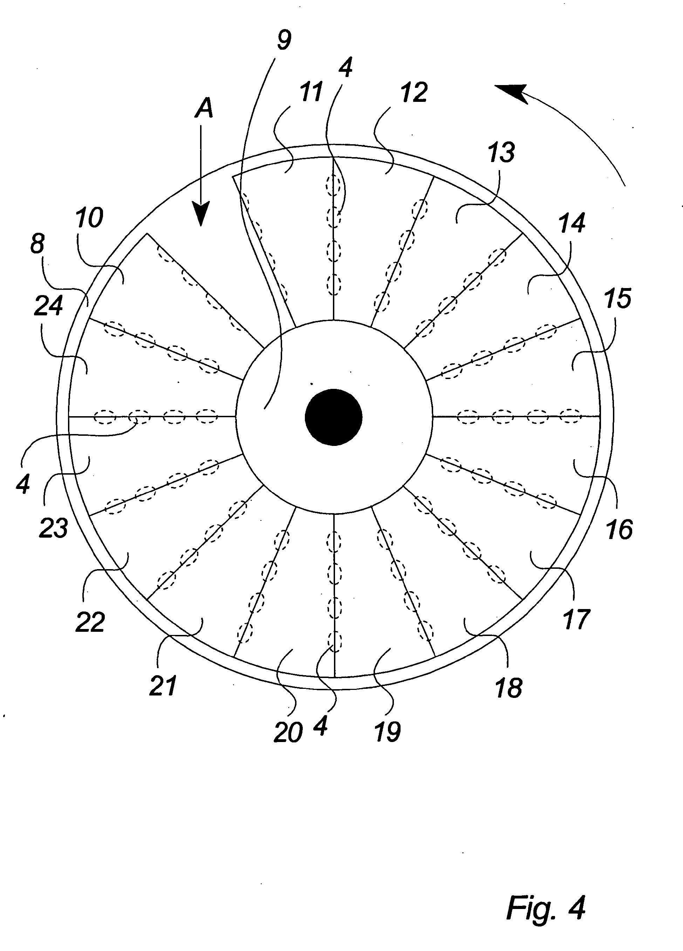

In the example shown, each mould box 10-24 extends over 22.5° of the circle corresponding to 1/16 of the circle; in more realistic embodiments, each mould box extends over 4°. Only 15 mould boxes 10-24 are provided in the circle, however, so that without affecting neighbouring mould boxes to be displaced radially with respect to each other, a first opening A can be formed between two neighbouring mould boxes, thereby permitting the items of ice formed in the mould cavities 4 between the mould boxes to be extracted by a device (extraction means, not shown) which is stationary placed at this position. In the position shown in fig. 2, a first opening A is formed between two mould boxes 10, 24. At the opening A, there is additionally arranged a cleaning device (not shown), which cleans the opposite faces of the mould boxes 10, 24 between which opening A is formed, including the surfaces of the mould cavities 4, when the items of ice are extracted from the moulds 4. When the cleaning is completed, the index control of the system moves the one of the mould boxes 10, which in the mould cavities 4 formed at the opposite face of the one facing opening A contains items of ice, one step, i.e. 22.5° in the direction of rotation of the circle as indicated by the arrow, with respect to the outer ring 8, the inner ring 9 and the remaining mould boxes 11-24, which are all kept stationary. The opening A is now, as shown in Fig. 3, formed between other neighbouring mould boxes 10, 11 between which there are mould cavities 4, wherein items of edible ice are formed. The opening A is now no longer aligned with the stationary extraction means for extracting the items of edible ice, and, therefore, the index control rotates the outer circle 8 and all the mould boxes 10-24 one step, i.e. 22.5° in the direction of rotation of the circle as indicated by the arrow, whereby the opening A is placed, as shown in Fig. 4, aligned with the stationary extraction means (not shown), the arrangement of mould boxes 10-24 corresponding to the arrangement shown in Fig. 2 except that all mould boxes 10-24 has been moved one step in the direction of rotation of the circle except from the mould box 10, which has been moved two steps, i.e. 45°.

Alternatively, the stationary means for extraction of items of edible ice can be arranged, so that the items of edible ice are gripped in advance of the formation of the new opening A between the neighbouring mould boxes 10, 11, e.g. by gripping around support sticks in the items of edible ice, after which opening A is formed and the items of edible ice are removed by the means for extraction. Thereafter, the index control rotates the outer circle 8 and all mould boxes 10-24 one step, i.e. 22.5°, in the direction of rotation of the circle.

Again, empty and cleaned mould cavities 4 are formed between the mould boxes 10, 24, where the opening A was previously formed, and a filling device (not shown) fills these mould cavities 4 with a mass of ice. In the mould boxes 10, 24, the inner cavities are now supplied with cold brine at about -40 °C, so that the mass of ice freezes in the mould cavities 4 for the formation of items of edible ice. The flow of brine is maintained until the mould boxes 10, 24 during the operation of the system reach a position immediately before the opening A, where a change is made to flow through the inner cavities of the mould boxes with a hot brine that ensures that the formed items of edible ice can be removed from the mould cavities 4 when the neighbouring mould boxes 10, 24 are separated from each other for formation of the opening A by thawing the outer layer of the items of edible ice, the so-called thawing-free.

When the outer ring 8 has moved one round during operation of the system, the mould boxes 10-24 each will have moved one round and one step the mould boxes 10-24 being moved two positions by the index control while the outer ring 8 moves one position at the pace of the system when they reach the opening A. The inner ring 9, which contrary to the outer ring 8 is connected to the individual mould boxes 10-24 by flexible connections to supply brine to and from the inner cavities of the mould boxes 10-24, must, however, be moved, so that it reaches one round in the same time as the mould boxes 10-24, and, therefore, the inner ring 9 rotates 24° (360° divided by 15 mould boxes) each time the outer ring 8 with the mould boxes 10-24 rotates 22.5°. The flexible connections between the mould boxes 10-24 and the inner ring 9 must be able to absorb at least a relative angular displacement of half a step, i.e. 11.25°, because the mould boxes 10-24 are moved two positions when they reach the opening A.

The faces of the mould boxes 10-24 between which the mould cavities 4 are formed, are pressed against the corresponding faces of the neighbouring mould boxes in order to seal the formed mould cavities 4. However, the mould boxes 10-24 are arranged, so that the distal end of the mould box with respect to the axis of the circle is allowed to be radially displaced during operation of the system, the radial extension of the mould boxes 10-24 being changed partly due to variations in their temperature during operation of the system and, in particular, because of the extension of the mass of ice that takes place when this freezes to an item of edible ice, thereby implying a little larger distance between the neighbouring mould boxes, and this change in distance can be accommodated by the boxes being able to move radially, so that the circumference of the circle can be increased. In order to press the mould boxes 10-24 together, they are provided with individual compression means to affect each individual mould box by a force, which is directed inwards towards the centre of the circle. The fact that the compression means are individual, i.e. that there is a spring for each mould box 10-24 acting between the outer end of the mould box and the outer ring 8, enables the index control to move one mould box 10-24 at a time without affecting the compression forces exposed onto the other mould boxes.

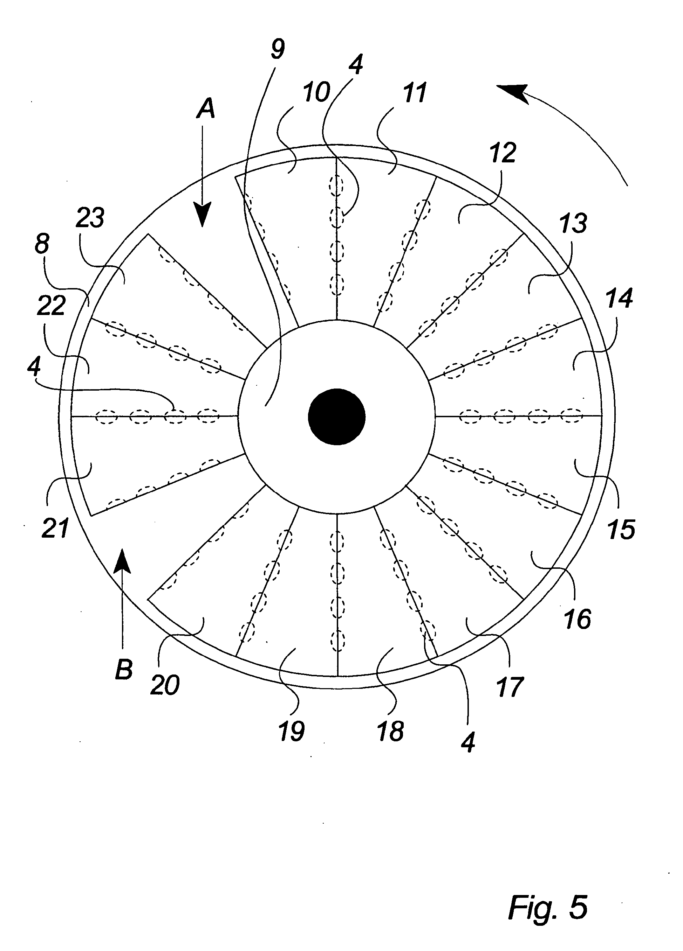

Figs. 5-7 show another embodiment of the invention, wherein the mould boxes 10-23 are arranged in an encircling circle. Each mould box extends over 22.5° of the circle as in the first embodiment, corresponding to 1/16 of the circle. However, there is only provided 14 mould boxes 10-23 in the circle, so that in addition to the first opening A, which is provided between two neighbouring mould boxes 10, 23, so that the items of ice formed in the mould cavities 4 between the mould boxes 10, 23 can be extracted by a device (extraction means, not shown), which is stationary placed at , this position, simultaneously another opening B is formed between two neighbouring mould boxes 20, 21. At the opening B, a cleaning means (not shown) is arranged, which cleans the opposite faces of the mould boxes 21, 22 between which the opening B is formed, including the surfaces of the mould cavities 4. The extraction of items of ice can be performed with this device at the first opening A, while simultaneously cleaning of the mould boxes 20, 21 can be performed at the other opening B, which makes the operation of the system more efficient.

While the mould boxes 21, 22, 23 are located between the angular position for the first opening A and the second opening B, their inner cavities are flowed through by a hot brine ensuring that any portions of the mass of ice which have not been removed by the extraction means melt, e.g. mass of ice being exterior to the mould cavities 4 or portions of formed items of ice that has been broken off that portion which has been removed by the extraction means.

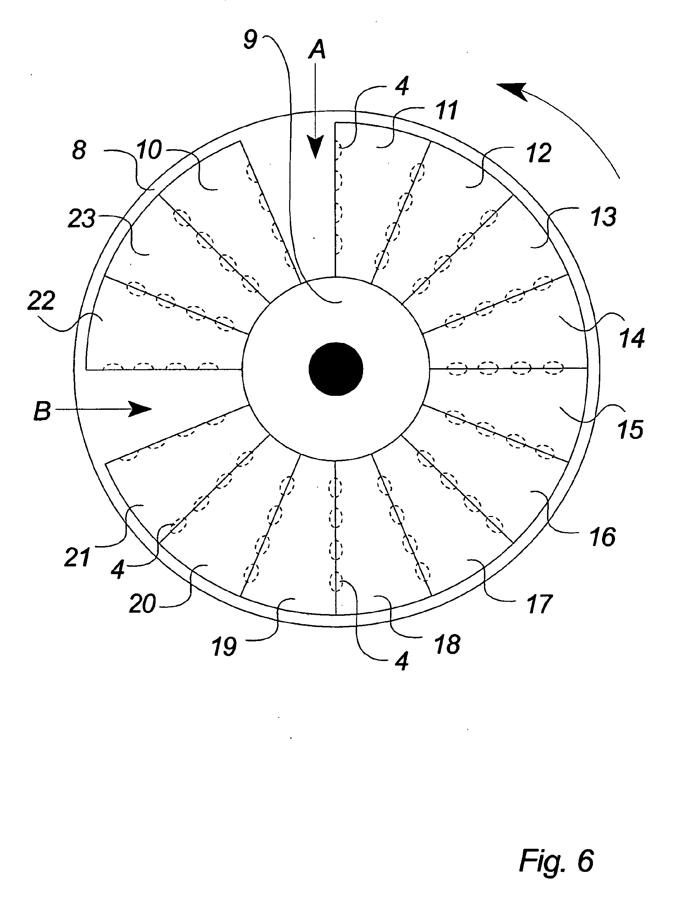

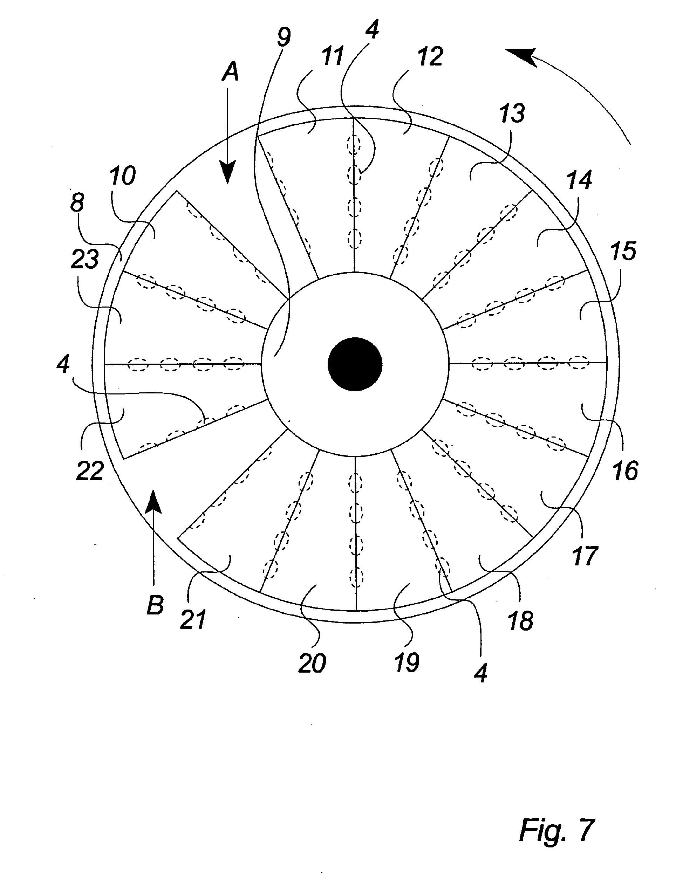

When the extraction and cleaning is completed, the index control of the system moves the mould box 10, which contains the items of edible ice in the mould cavities 4 that are formed at the opposite face of that facing the opening A, one step, i.e. 22.5° in the direction of rotation of the circle as indicated by the arrow, , and likewise, the mould box 21 positioned ahead of the second opening B is moved one step in the direction of rotation. Meanwhile, the outer ring 8, the inner ring 9, and the remaining mould boxes 11-20, 22 and 23 are all kept stationary. As shown in Fig. 6, the opening A is now formed between other neighbouring mould boxes 10, 11 between which there are mould cavities 4, wherein items of edible ice are formed, and, likewise, the other opening B is formed between to other neighbouring mould boxes 21, 22 than before. Now, the openings A, B are not aligned with the stationary extraction means for extracting the items of edible ice and the cleaning device, respectively, and, therefore, the index control rotates the outer ring 8 and all the mould boxes 10-23 one step, i.e. 22.5° in the direction of rotation of the ring as indicated by the arrow, whereby, as shown in Fig. 7, the opening A is aligned with the stationary extraction means (not shown), and the second opening B is aligned with the cleaning device (not shown). The arrangement of mould boxes 10-23 corresponds to the arrangement shown in fig. 5 except that all mould boxes 10-23 are moved one step in the direction of rotation of the circle, except from the mould boxes 10 and 21, which both are moved two steps, i.e. 45°.

Alternatively, the items of edible ice can be extracted in advance of the index control rotating the outer ring 8 and all mould boxes 10-23 as described above with reference to Figs. 2-4.

Again, empty and cleaned mould cavities are formed between the mould boxes 20, 21, where the opening B was formed previously, and a filling device (not shown) fills these cavities 4 with a mass of ice. The inner cavities in the mould boxes 20, 21 are provided with cold brine at about -40 °C, so that the mass of ice freezes in the mould cavities 4 for the formation of items of edible ice. The flow of brine is maintained until the mould boxes 20, 21 during operation of the system reach a position immediately before of the opening A, where a change is made to flow through the inner cavities of the mould boxes with hot brine ensuring that the formed items of edible ice can be removed from the mould cavities 4 when the neighbouring mould boxes 20, 21 are separated from each other for the formation of the opening A by thawing the outer layer of the items of edible ice, the so-called thawing-free.

In this embodiment, the mould boxes 10-23 will each have moved one round and two steps, when the outer ring 8 has moved one round during operation of the system, the mould boxes 10-23 being moved two positions by the index control at the pace of the system, where they reach the opening A, as well as at the pace where they reach the second opening B, while the outer ring 8 moves one step. However, the inner ring 9 must be moved so that it reaches one round at the same time as the mould boxes 10-24, and, therefore, the inner ring 9 is rotated 25.7° (360° divided by 14 mould boxes) each time the outer ring 8 with the mould boxes 10-23 are rotated 22.5°. The flexible connections between the mould boxes 10-23 and the inner ring 9 must be able to accommodate at least a mutual angular displacement of one step, i.e. 22.5°, because the mould boxes 10-23 are moved two positions, when they reach the opening A as well as the second opening B.

For both of the illustrated embodiments, a series of details can be modified by a person skilled in the art without changing the core idea of the invention. The step of rotating individual mould boxes can be carried out, e.g., after the general rotation of the outer ring with all mould boxes takes place instead of before, as described above.

## Claims

1. System for use in creating form-moulded items of edible ice from a mass of ice, the system comprising
a number of mould boxes (1, 10-24) arranged to form a circle, wherein moulds (4) for receiving the mass of ice are formed between neighbouring mould boxes, each of the mould boxes comprising an interior cavity for containing a fluid medium and an inlet stub (5) and an outlet stub (6) both connecting to the interior cavity,
supply means for supplying a fluid cooling medium to the inlet stub of each mould box,
discharge means for discharging the fluid cooling medium from the outlet stub of each mould box, and
extraction means for removing the created items of edible ice,
**characterized in, that**
the mould boxes (10-24; 10-23) are arranged, so that a first opening (A) is formed in the circle between two neighbouring mould boxes (10, 24; 10, 23), and
the system comprises an index control arranged to perform an angular rotation about the axis of the circle between a first (10) of the two neighbouring mould boxes (10, 24; 10, 23) with respect to an adjacent group of a plurality of neighbouring mould boxes (11-24; 11-20) for closing the first opening (A) so that again a first opening (A) is formed between the first mould box (10) and the respective neighbouring mould box (11), which constitutes a part of the adjacent group, which first opening (A) allows removal of one or more created items of edible ice from moulds (4) formed between the two neighbouring mould boxes (10, 11) by means of the extraction means,
the mould boxes (11-24; 11-20) of said group not being substantially displaced with respect to each other during angular rotation and, thus, not being displaced during formation of the first opening (A) between the first mould box (10) and the respective neighbouring mould box (11).

2. System according to claim 1, wherein each mould box has substantially the same angular extent in the circle.

3. System according to claim 2, wherein the magnitude of the angular rotation is substantially equal to the circular angle constituted by a mould box.

4. System according to claim 2 or 3, wherein the number of mould boxes constitutes at the most one less than the number required to form a filled up circle.

5. System according to any one of the preceding claims further comprising a cleaning device arranged to remove any residues of items of edible ice, which have not been extracted by the extraction means, at least from the opposite faces of the mould boxes between which an opening (A, B) has been formed.

6. System according to any one of the preceding claims further comprising feeding means for feeding material into one or more mould halves (2) formed in the opposite faces of mould boxes between which an opening (A, B) has been formed.

7. System according to any of claims 1-6, wherein the mould boxes (10-23) are arranged so that in addition to the first opening (A), a second opening (B) is formed in the circle between two neighbouring mould boxes (20, 21), and that the system comprises an index control arranged to perform an angular rotation about the axis of the circle between a first (21) of the two mould boxes (20, 21) with respect to an adjacent group of one or more neighbouring mould boxes (22, 23) between the first opening (A) and the second opening (B) for closing the second opening (B), so that again a second opening (B) is formed between the first mould box (21) and the respective neighbouring mould box (22), which constitutes a part of the adjacent group, the mould boxes (22, 23) of said group not being substantially displaced during angular rotation and, thus, not being displaced during formation of the second opening (B) between the first mould box (21) and the respective neighbouring mould box (22).

8. System according to claim 7, wherein the number of mould boxes constitutes at the most two less than the number required to form a filled up circle.

9. System according to claim 7 or 8 further comprising a cleaning device arranged to remove any residues of items of edible ice, which have not been extracted by the extraction means, at least from the opposite faces of the mould boxes between which the second opening (B) has been formed.

10. System according to any one of claims 7-9 further comprising feeding means for feeding material into one or more mould halves formed in the opposite faces of mould boxes between which the second opening (B) has been formed.

11. System according to any one of the preceding claims, wherein the supply means and the discharge means comprises flexible connections for the inlet stubs and outlet stubs for each of the mould boxes, so that angular rotations are allowed between the mould boxes and a fixed part of the supply means and the discharge means.

12. System according to any one of the preceding claims, wherein each of the mould boxes is arranged, so that the distal end of the mould box is allowed to be displaced in the radial direction with respect to the axis of the circle during operation of the system, and wherein the system comprises compression means for affecting each of the mould boxes with a force directed inwards, substantially towards the axis of the circle.

13. System according to claim 12, wherein the compression means comprises individual means for each mould box.

14. System according to any one of the preceding claims, wherein the supply means further comprises means for selective supply of a hot fluid to the mould boxes.

15. System according to any one of the preceding claims, wherein the extraction means are arranged stationary, and wherein the index control further is arranged to perform an angular rotation of all the mould boxes.

## Patentansprüche

1. System zur Verwendung bei der Erzeugung von in Formen gegossenen Gegenständen aus Speiseeis, ausgehend von einer Eismasse, wobei das System, Folgendes umfasst:
eine Zahl von Formkästen (1, 10-24), die derart angeordnet sind, dass sie einen Ring bilden, wobei Gussformen (4) zur Aufnahme der Eismasse zwischen benachbarten Formkästen ausgebildet sind und wobei jeder der Formkästen einen inneren Hohlraum zur Aufnahme eines Fluidmediums sowie einen Einlassstutzen (5) und einen Auslassstutzen (6), die beide mit dem inneren Hohlraum verbunden sind, umfasst,
Zuführungsmittel für die Zuführung eines fluiden Kühlungsmediums an den Einlassstutzen jedes Formkastens,
Abführungsmittel zum Abführen des fluiden Kühlungsmediums vom Auslassstutzen jedes Formkastens, und
Entnahmemittel zum Entnehmen der erzeugten Gegenstände aus Speiseeis,
**dadurch gekennzeichnet, dass**
die Formkästen (10-24; 10-23) so angeordnet sind, dass in dem Ring zwischen zwei benachbarten Formkästen (10, 24; 10, 23) eine erste Öffnung (A) ausgebildet ist, und
das System eine Indexsteuerung umfasst, die dafür eingerichtet ist, eine Winkeldrehung um die Achse des Rings von einem ersten (10) der beiden benachbarten Formkästen (10, 24; 10, 23) relativ zu einer angrenzenden Gruppe von mehreren benachbarten Formkästen (11-24; 11-20) auszuführen, und dies zum Schließen der ersten Öffnung (A), derart, dass erneut eine erste Öffnung (A) gebildet wird, und dies zwischen dem ersten Formkasten (10) und dem zugehörigen benachbarten Formkasten (11), der einen Teil der angrenzenden Gruppe bildet, wobei diese erste Öffnung (A) mittels der Entnahmemittel die Entnahme eines oder mehrerer erzeugter Gegenstände aus Speiseeis aus den Formen (4) gestattet, die zwischen den beiden benachbarten Formkästen (10, 11) ausgebildet sind,
wobei die Formkästen (11-24; 11-20) der Gruppe während der Winkeldrehung nicht wesentlich gegeneinander verschoben werden und diese somit während der Ausbildung der ersten Öffnung (A) zwischen dem ersten Formkasten (10) und dem zugehörigen benachbarten Formkasten (11) nicht verschoben werden.

2. System nach Anspruch 1, wobei jeder Formkasten im Wesentlichen dieselbe Winkelausdehnung im Ring hat.

3. System nach Anspruch 2, wobei die Größe der Winkeldrehung im Wesentlichen gleich dem durch einen Formkasten gebildeten Winkel im Ring ist.

4. System nach Anspruch 2 oder 3, wobei die Zahl der Formkästen höchstens eins weniger ist, als die Zahl, die erforderlich ist, um einen ausgefüllten Ring zu bilden.

5. System nach einem der vorhergehenden Ansprüche, das außerdem eine Reinigungsvorrichtung umfasst, die dafür eingerichtet ist, etwaige Reste von Gegenständen aus Speiseeis zu entfernen, die nicht von den Entnahmemittel entnommen wurden, und dies wenigstens von den sich gegenüberliegenden Seiten der Formkästen, zwischen denen eine Öffnung (A, B) gebildet wurde.

6. System nach einem der vorhergehenden Ansprüche, das außerdem Zuführungsmittel umfasst, um Material in eine oder mehrere Formhälften (2) zuzuführen, die in den sich gegenüberliegenden Seiten der Formkästen ausgebildet sind, zwischen denen eine Öffnung (A, B) gebildet wurde.

7. System nach einem der Ansprüche 1 bis 6, bei dem die Formkästen (10-23) so angeordnet sind, dass in dem Ring, zusätzlich zur ersten Öffnung (A), zwischen zwei benachbarten Formkästen (20, 21) eine zweite Öffnung (B) gebildet wird, wobei das System eine Indexsteuerung umfasst, die dafür eingerichtet ist, eine Winkeldrehung um die Achse des Rings von einem ersten (21) der beiden Formkästen (20, 21) relativ zu einer angrenzenden Gruppe von einem oder mehreren benachbarten Formkästen (22, 23) zwischen der ersten Öffnung (A) und der zweiten Öffnung (B) auszuführen, und dies um die zweite Öffnung (B) derart zu schließen, dass erneut eine zweite Öffnung (B) gebildet wird, und dies zwischen dem ersten Formkasten (21) und dem entsprechenden benachbarten Formkasten (22), der einen Teil der angrenzenden Gruppe bildet, wobei die Formkästen (22, 23) dieser Gruppe während der Winkeldrehung nicht wesentlich verschoben werden und diese somit während der Ausbildung der zweiten Öffnung (B) zwischen dem ersten Formkasten (21) und dem zugehörigen benachbarten Formkasten (22) nicht verschoben werden.

8. System nach Anspruch 7, wobei die Zahl der Formkästen höchstens zwei weniger ist, als die Zahl, die erforderlich ist, um einen ausgefüllten Ring zu bilden.

9. System nach Anspruch 7 oder 8, das außerdem eine Reinigungsvorrichtung umfasst, die dafür eingerichtet ist, etwaige Reste von Gegenständen aus Speiseeis zu entfernen, die nicht von den Entnahmemittel entnommen wurden, und dies wenigstens von den sich gegenüberliegenden Seiten der Formkästen, zwischen denen die zweite Öffnung (B) gebildet wurde.

10. System nach einem der Ansprüche 7 bis 9, das außerdem Zuführungsmittel umfasst, um Material in eine oder mehrere Formhälften zuzuführen, die in den sich gegenüberliegenden Seiten der Formkästen ausgebildet sind, zwischen denen die zweite Öffnung (B) gebildet wurde.

11. System nach einem der vorhergehenden Ansprüche, bei dem die Zuführungsmittel und die Abführungsmittel für jeden der Formkästen anpassungsfähige Verbindungen für die Einlassstutzen und die Auslassstutzen umfassen, so dass zwischen den Formkästen und einem feststehenden Teil der Zuführungsmittel und der Abführungsmittel Winkeldrehungen möglich sind.

12. System nach einem der vorhergehenden Ansprüche, bei dem jeder der Formkästen so konzipiert ist, dass während des Betriebs des Systems das außen liegende Ende der Formkästen relativ zur Achse des Rings in radialer Richtung verschoben werden kann, und wobei das System ein Pressmittel umfasst, um auf jeden der Formkästen eine Kraft auszuüben, die einwärts gerichtet ist, im Wesentlichen auf die Achse des Rings zu.

13. System nach Anspruch 12, wobei das Pressmittel für jeden Formkasten ein einzelnes Pressmittel umfasst.

14. System nach einem der vorhergehenden Ansprüche, bei dem die Zuführungsmittel außerdem ein Mittel zur wahlweisen Zuführung eines heißen Fluids an die Formkästen umfassen.

15. System nach einem der vorhergehenden Ansprüche, bei dem die Entnahmemittel feststehend angeordnet sind und wobei die Indexsteuerung außerdem dafür eingerichtet ist, eine Winkeldrehung aller Formkästen auszuführen.

## Revendications

1. Système à utiliser dans la création d'articles moulés de glace comestible à partir d'une masse de glace, le système comprenant
un certain nombre de boîtiers de moule (1, 10 à 24) agencés pour former un cercle, où des moules (4) destinés à recevoir la masse de glace sont formés entre des boîtiers de moule voisins, chacun des boîtiers de moule comprenant une cavité intérieure destinée à contenir un fluide et un raccord d'admission (5) et un raccord de refoulement (6) raccordant tous deux la cavité intérieure,
un moyen d'alimentation pour fournir un fluide de refroidissement au raccord d'admission de chaque boîtier de moule,
un moyen d'évacuation pour évacuer le fluide de refroidissement par le raccord de refoulement de chaque boîtier de moule, et
un moyen d'extraction pour retirer les articles de glace comestible créés,
**caractérisé en ce que**
les boîtiers de moule (10 à 24 ; 10 à 23) sont agencés de sorte qu'une première ouverture (A) est formée dans le cercle entre deux boîtiers de moule voisins (10, 24 ; 10, 23), et
le système comprend une commande d'index agencée pour effectuer une rotation angulaire autour de l'axe du cercle entre un premier boîtier (10) des deux boîtiers de moule voisins (10, 24 ; 10, 23) par rapport à un groupe adjacent d'une pluralité de boîtiers de moule voisins (11 à 24 ; 11 à 20) pour fermer la première ouverture (A) de sorte qu'à nouveau, une première ouverture (A) soit formée entre le premier boîtier de moule (10) et le boîtier de moule voisin (11) respectif qui constitue une partie du groupe adjacent, la première ouverture (A) permettant le retrait d'un ou plusieurs articles de glace comestible créés des moules (4) formés entre les deux boîtiers de moule voisins (10, 11) au moyen du moyen d'extraction,
les boîtiers de moule (11 à 24 ; 11 à 20) dudit groupe n'étant pas sensiblement déplacés les uns par rapport aux autres pendant la rotation angulaire et ainsi, n'étant pas déplacé pendant la formation de la première ouverture (A) entre le premier boîtier de moule (10) et le boîtier de moule voisin (11) respectif.

2. Système selon la revendication 1, dans lequel chaque boîtier de moule a sensiblement la même étendue angulaire dans le cercle.

3. Système selon la revendication 2, dans lequel la grandeur de la rotation angulaire est sensiblement égale à l'angle circulaire constitué par un boîtier de moule.

4. Système selon la revendication 2 ou 3, dans lequel le nombre de boîtiers de moule constitue au plus un moule de moins que le nombre requis pour former un cercle entièrement fermé.

5. Système selon l'une quelconque des revendications précédentes, comprenant en outre un dispositif de nettoyage agencé pour éliminer tous les résidus d'articles de glace comestible, qui n'ont pas été extraits par le moyen d'extraction, d'au moins les faces opposées des boîtiers de moule entre lesquelles une ouverture (A, B) a été formée.

6. Système selon l'une quelconque des revendications précédentes, comprenant en outre un moyen de chargement pour charger de la matière dans une ou plusieurs moitiés de moule (2) formées dans les faces opposées de boîtiers de moule entre lesquelles une ouverture (A, B) a été formée.

7. Système selon l'une quelconque des revendications 1 à 6, dans lequel les boîtiers de moule (10 à 23) sont agencés de sorte qu'en plus de la première ouverture (A), une seconde ouverture (B) est formée dans le cercle entre deux boîtiers de moule voisins (20, 21), et de sorte que le système comprend une commande d'index agencé pour effectuer une rotation angulaire autour de l'axe du cercle entre un premier boîtier (21) des deux boîtiers de moule (20, 21) par rapport à un groupe adjacent d'un ou plusieurs boîtiers de moule voisin (22, 23) entre la première ouverture (A) et la seconde ouverture (B) pour fermer la seconde ouverture (B), de sorte qu'à nouveau, une seconde ouverture (B) soit formée entre le premier boîtier de moule (21) et le boîtier de moule voisin (22) respectif, qui constitue une partie du groupe adjacent, les boîtiers de moule (22, 23) dudit groupe n'étant pas sensiblement déplacés pendant la rotation angulaire, et ainsi n'étant pas déplacés pendant la formation de la seconde ouverture (B) entre le premier boîtier de moule (21) et le boîtier de moule voisin (22) respectif.

8. Système selon la revendication 7, dans lequel le nombre de boîtiers de moule constitue au plus deux moules de moins que le nombre requis pour former un cercle entièrement fermé.

9. Système selon la revendication 7 ou 8, comprenant en outre un dispositif de nettoyage agencé pour éliminer tous les résidus d'articles de glace comestible, qui n'ont pas été extraits par le moyen d'extraction, d'au moins les faces opposées des boîtiers de moule entre lesquelles une ouverture (B) a été formée.

10. Système selon l'une quelconque des revendications 7 à 9, comprenant en outre un moyen de chargement pour charger de la matière dans une ou plusieurs moitiés de moule formées dans les faces opposées de boîtiers de moule entre lesquelles une ouverture (B) a été formée.

11. Système selon l'une quelconque des revendications précédentes, dans lequel le moyen d'alimentation et le moyen d'évacuation comprennent des raccords flexibles pour les raccords d'admission et les raccords de refoulement pour chacun des boîtiers de moule, de sorte que des rotations angulaires sont permises entre les boîtiers de moule et une partie fixe du moyen d'alimentation et du moyen d'évacuation.

12. Système selon l'une quelconque des revendications précédentes, dans lequel chacun des boîtiers de moule est agencé de sorte que l'extrémité distale du boîtier de moule peut se déplacer dans la direction radiale par rapport à l'axe du cercle pendant le fonctionnement du système, et dans lequel le système comprend un moyen de compression pour affecter chacun des boîtiers de moule avec une force dirigée vers l'intérieur, sensiblement vers l'axe du cercle.

13. Système selon la revendication 12, dans lequel le moyen de compression comprend un moyen individuel pour chaque boîtier de moule.

14. Système selon l'une quelconque des revendications précédentes, dans lequel le moyen d'alimentation comprend en outre un moyen pour fournir sélectivement un fluide chaud aux boîtiers de moule.

15. Système selon l'une quelconque des revendications précédentes, dans lequel le moyen d'extraction est agencé de manière stationnaire, et dans lequel la commande d'index est en outre agencée pour effectuer une rotation angulaire de tous les boîtiers de moule.
